# EUROPEAN PATENT APPLICATION

(11) **EP 4 597 917 A1**
(43) Date of publication of application: **06.08.2025**
(21) Application number: 22960184.4
(22) Date of filing: 29.09.2022
(51) Int. Cl.: H04L 9/08, H04W 12/041, H04W 12/0431

(54) **DIRECT-COMMUNICATION KEY GENERATION METHOD AND APPARATUS**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2022/122942
(87) International publication number: WO 2024/065549

(57) **Abstract**

The present disclosure relates to the field of communications. Provided are a direct-communication key generation method and apparatus, which can be applied to communication systems such as a long term evolution (LTE) system, a fifth generation mobile communication system, a 5G new radio (NR) system, or other new mobile communication systems in the future. The method comprises: sending a direct communication request to a second UE, wherein the direct communication request comprises first key-related information; receiving second key-related information from the second UE; and generating a direct-communication intermediate key according to the first key-related information and the second key-related information. By means of the technique in the present disclosure, a direct-communication intermediate key which can be shared by a first UE and a second UE can be generated, such that integrity protection and/or encryption protection for direct communication of a ranging link positioning service between the first UE and the second UE can be realized according to the direct-communication intermediate key, thereby improving the security of data transmission in the direct communication of the ranging link positioning service.

## Description

### TECHNICAL FIELD

The disclosure relates to the field of mobile communication technology, in particular to a direct communication key generation method and apparatus.

### BACKGROUND

In the related art, for security protection of the direct communication of specific application services between user equipments (UEs), it is necessary to configure the same long-term valid credential using for specific application services for UEs conducting direct communication to establish the security of direct communication. However, for a sidelink (SL) positioning service, because the UE is not bound to specific application services, any UE may be involved in the SL positioning service. For example, any UE may be randomly designated as a positioning UE or a target UE by the network, but it is not practical and safe to provide all the UEs with the same long-term valid credential using for the SL positioning service. Currently, there is no means to protect the security of the direct communication between UEs for the SL positioning service.

### SUMMARY

The disclosure provides a direct communication key generation method and apparatus, which may be applied to various communication systems such as long term evolution (LTE) system, 5th generation (5G) mobile communication system, 5G new radio (NR) system, or other future new mobile communication systems. Through the solutions of the disclosure, a direct communication intermediate key that may be shared by a first UE and a second UE is generated, so that integrity protection and/or encryption protection of direct communication between the first UE and the second UE for a sidelink (SL) positioning service may be realized according to the direct communication intermediate key, and a security of data transmission in the direct communication for the SL positioning service is improved.

According to a first aspect of embodiments of the disclosure, a method for generating a direct communication key is provided. The method is performed by a first UE, and includes:
sending a direct communication request to a second UE, in which the direct communication request is used for requesting to establish an SL between the first UE and the second UE for an SL positioning service, and the direct communication request includes first key related information, and the first key related information is used for the second UE to obtain a direct communication intermediate key and second key related information from a first positioning key management function (PKMF) of the first UE;
receiving the second key related information sent by the second UE; and
generating the direct communication intermediate key according to the first key related information and the second key related information;
   in which the direct communication intermediate key is used to generate a direct communication session key for integrity protection and/or encryption protection of information transmitted between the first UE and the second UE through the SL.

Optionally, the first key related information includes a first random number, root key related information for obtaining a root key, a positioning service code for indicating a positioning service type, and the second key related information includes a second random number.

Optionally, the root key related information includes a valid root key identification (ID) or a subscription concealed identifier (SUCI) of the first UE.

Optionally, the method further includes:
sending a root key acquisition request to the first PKMF; and
receiving a root key acquisition response sent by the first PKMF, in which the root key acquisition response includes the valid root key ID and a root key corresponding to the valid root key ID.

Optionally, the root key acquisition request includes a local root key ID stored by the first UE, in which the first PKMF determines the valid root key ID and the root key according to the local root key ID.

Optionally, the direct communication session key includes a confidentiality key for encrypting and decrypting information and an integrity key for verifying a data integrity.

According to a second aspect of embodiments of the disclosure, a method for generating a direct communication key is provided. The method is performed by a second UE, and includes:
receiving a direct communication request sent by a first UE, in which the direct communication request is used for requesting to establish an SL between the first UE and the second UE for an SL positioning service, and the direct communication request includes first key related information;
sending the first key related information to a second PKMF of the second UE, to enable the second PKMF to obtain a direct communication intermediate key and second key related information from a first PKMF of the first UE according to the first key related information;
receiving the direct communication intermediate key and the second key related information sent by the second PKMF; and
sending the second key related information to the first UE, in which the first key related information and the second key related information are used for the first UE to generate the direct communication intermediate key;
in which the direct communication intermediate key is used to generate a direct communication session key for integrity protection and/or encryption protection of information transmitted between the first UE and the second UE through the SL for the SL positioning service.

Optionally, the first key related information includes a first random number, root key related information for obtaining a root key, a positioning service code for indicating a positioning service type, and the second key related information includes a second random number.

Optionally, the root key related information includes a valid root key ID or an SUCI of the first UE.

Optionally, the direct communication session key includes a confidentiality key for encrypting and decrypting information and an integrity key for verifying a data integrity.

According to a third aspect of embodiments of the disclosure, a method for generating a direct communication key is provided. The method is performed by a first PKMF of a first UE, and includes:
receiving first key related information sent by a second PKMF of a second UE;
generating second key related information;
generating a direct communication intermediate key according to the first key related information and the second key related information; and
sending the second key related information and the direct communication intermediate key to the second PKMF of the second UE;
in which the direct communication intermediate key is used to generate a direct communication session key for integrity protection and/or encryption protection of information transmitted between the first UE and the second UE during an execution of an SL positioning service.

Optionally, the first key related information includes a first random number, root key related information for obtaining a root key, a positioning service code for indicating a positioning service type, and the second key related information includes a second random number.

Optionally, the root key related information includes a valid root key ID or an SUCI of the first UE.

Optionally, the method further includes:
receiving a root key acquisition request sent by the first UE;
determining whether the first UE is authorized to use the SL positioning service; and
in response to determining that the first UE is authorized to use the SL positioning service, sending a root key acquisition response to the first UE, in which the root key acquisition response includes the valid root key ID and a root key corresponding to the valid root key ID.

Optionally, the root key acquisition request includes a local root key ID stored by the first UE, and the method further includes:
determining the valid root key ID and the root key according to the local root key ID.

Optionally, the direct communication session key includes a confidentiality key for encrypting and decrypting information and an integrity key for verifying a data integrity.

According to a fourth aspect of embodiments of the disclosure, a method for generating a direct communication key is provided. The method is performed by a second PKMF of a second UE, and includes:
receiving first key related information sent by a second UE;
determining whether the second UE is authorized to use an SL positioning service;
in response to determining that the second UE is authorized to use the SL positioning service, sending the first key related information to a first PKMF of a first UE, in which the first key related information and second key related information generated by the first PKMF are used by the first PKMF to generate a direct communication intermediate key;
receiving the direct communication intermediate key and the second key related information sent by the first PKMF; and
sending the direct communication intermediate key and the second key related information to the second UE;
in which the direct communication intermediate key is used to generate a direct communication session key for integrity protection and/or encryption protection of information transmitted between the first UE and the second UE during an execution of the SL positioning service.

Optionally, the first key related information includes a first random number, root key related information for obtaining a root key, a positioning service code for indicating a positioning service type, and the second key related information includes a second random number.

Optionally, the root key related information includes a valid root key ID or an SUCI of the first UE.

Optionally, the direct communication session key includes a confidentiality key for encrypting and decrypting information and an integrity key for verifying a data integrity.

According to a fifth aspect of embodiments of the disclosure, a communication apparatus is provided. The communication apparatus has the ability to implement part or all of the functions of the UE in the method described in the first aspect. For example, the communication apparatus may have functions of some or all of the embodiments of the disclosure, or may have a function of independently implementing any embodiment of the disclosure. The functions may be implemented by hardware, or may be implemented by executing corresponding software using the hardware. The hardware or the software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, and the storage module is configured to store necessary computer programs and data for the communication apparatus.

As an example, the processing module may be a processor. The transceiver module may be a transceiver or a communication interface. The storage module may be a memory. In an implementation, the communication apparatus includes a transceiver module and a processing module.

The transceiver module is configured to:
send a direct communication request to a second UE, in which the direct communication request is used for requesting to establish an SL between the first UE and the second UE for an SL positioning service, and the direct communication request includes first key related information, and the first key related information is used for the second UE to obtain a direct communication intermediate key and second key related information from a first PKMF of the first UE; and
receive the second key related information sent by the second UE.

The processing module is configured to: generate the direct communication intermediate key according to the first key related information and the second key related information.

The direct communication intermediate key is used to generate a direct communication session key for integrity protection and/or encryption protection of information transmitted between the first UE and the second UE through the SL.

According to a sixth aspect of embodiments of the disclosure, another communication apparatus is provided. The communication apparatus has the ability to implement part or all of the functions of the network device in the method described in the second aspect. For example, the communication apparatus may have functions of some or all of the embodiments of the disclosure, or may have a function of independently implementing any embodiment of the disclosure. The functions may be implemented by hardware, or may be implemented by executing corresponding software using the hardware. The hardware or the software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, and the storage module is configured to store necessary computer programs and data for the communication apparatus.

As an example, the processing module may be a processor. The transceiver module may be a transceiver or a communication interface. The storage module may be a memory. In an implementation, the communication apparatus includes a transceiver module.

The transceiver module is configured to:
receive a direct communication request sent by a first UE, in which the direct communication request is used for requesting to establish an SL between the first UE and the second UE for an SL positioning service, and the direct communication request includes first key related information;
send the first key related information to a second PKMF of the second UE, to enable the second PKMF to obtain a direct communication intermediate key and second key related information from a first PKMF of the first UE according to the first key related information;
receive the direct communication intermediate key and the second key related information sent by the second PKMF; and
send the second key related information to the first UE, in which the first key related information and the second key related information are used for the first UE to generate the direct communication intermediate key;
in which the direct communication intermediate key is used to generate a direct communication session key for integrity protection and/or encryption protection of information transmitted between the first UE and the second UE through the SL.

According to a seventh aspect of embodiments of the disclosure, another communication apparatus is provided. The communication apparatus has the ability to implement part or all of the functions of the network device in the method described in the second aspect. For example, the communication apparatus may have functions of some or all of the embodiments of the disclosure, or may have a function of independently implementing any embodiment of the disclosure. The functions may be implemented by hardware, or may be implemented by executing corresponding software using the hardware. The hardware or the software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, and the storage module is configured to store necessary computer programs and data for the communication apparatus.

As an example, the processing module may be a processor. The transceiver module may be a transceiver or a communication interface. The storage module may be a memory. In an implementation, the communication apparatus includes a transceiver module and a processing module.

The transceiver module is configured to receive first key related information sent by a second PKMF of a second UE.

The processing module is configured to generate second key related information, and generate a direct communication intermediate key according to the first key related information and the second key related information.

The transceiver module is further configured to send the second key related information and the direct communication intermediate key to the second PKMF of the second UE.

The direct communication intermediate key is used to generate a direct communication session key for integrity protection and/or encryption protection of information transmitted between the first UE and the second UE.

According to an eighth aspect of embodiments of the disclosure, another communication apparatus is provided. The communication apparatus has the ability to implement part or all of the functions of the network device in the method described in the second aspect. For example, the communication apparatus may have functions of some or all of the embodiments of the disclosure, or may have a function of independently implementing any embodiment of the disclosure. The functions may be implemented by hardware, or may be implemented by executing corresponding software using the hardware. The hardware or the software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module coupled to the transceiver module and the processing module, and the storage module is configured to store necessary computer programs and data for the communication apparatus.

As an example, the processing module may be a processor. The transceiver module may be a transceiver or a communication interface. The storage module may be a memory. In an implementation, the communication apparatus includes a transceiver module and a processing module.

The transceiver module is configured to receive first key related information sent by a second UE.

The processing module is configured to determine whether the second UE is authorized to use an SL positioning service.

The transceiver module is further configured to, in response to determining that the second UE is authorized to use the SL positioning service, send the first key related information to a first PKMF of a first UE, in which the first key related information and second key related information generated by the first PKMF are used for the first PKMF to generate a direct communication intermediate key; receive the direct communication intermediate key and the second key related information sent by the first PKMF; and send the direct communication intermediate key and the second key related information to the second UE.

The direct communication intermediate key is used to generate a direct communication session key for integrity protection and/or encryption protection of information transmitted between the first UE and the second UE.

According to a ninth aspect of embodiments of the disclosure, another communication apparatus is provided. The communication apparatus includes: a processor. When the processor calls computer programs stored in a memory, the method described in the first aspect above, the method described in the second aspect above, the method described in the third aspect above or the method described in the fourth aspect above is implemented.

According to a tenth aspect of embodiments of the disclosure, a communication apparatus is provided. The communication apparatus includes: a processor and a memory having computer programs stored therein. When the processor executes the computer programs stored in the memory, the communication apparatus is caused to implement the method described in the first aspect above, the method described in the second aspect above, the method described in the third aspect above or the method described in the fourth aspect above.

According to an eleventh aspect of embodiments of the disclosure, a communication apparatus is provided. The communication apparatus includes: a processor and an interface circuit. The interface circuit is configured to receive code instructions and transmit the code instructions to the processor. The processor is configured to run the code instructions to cause the device to perform the method described in the first aspect above, the method described in the second aspect above, the method described in the third aspect above or the method described in the fourth aspect above.

According to a twelfth aspect of embodiments of the disclosure, a direct communication key generation system is provided. The system includes the communication apparatus described in the fifth aspect, the sixth aspect, the seventh aspect or the eighth aspect, or the system includes the communication apparatus described in the ninth aspect, or the system includes the communication apparatus described in the tenth aspect, or the system includes the communication apparatus described in the eleventh aspect.

According to a thirteenth aspect of embodiments of the disclosure, a computer-readable storage medium is provided. The computer-readable storage medium is configured to store instructions that may be used by the above UE. When the instructions are executed, the UE is caused to implement the method described in the first aspect above, the method described in the second aspect above, the method described in the third aspect above or the method described in the fourth aspect above.

According to a fourteenth aspect of embodiments of the disclosure, a computer program product including computer programs is provided. When the computer programs are running on a computer, the computer is caused to implement the method described in the first aspect above, the method described in the second aspect above, the method described in the third aspect above or the method described in the fourth aspect above.

According to a fifteenth aspect of embodiments of the disclosure, a chip system is provided. The chip system includes at least one processor and an interface for supporting the UE in realizing the functions involved in the first aspect, the second aspect, the third aspect or the fourth aspect, e.g., determining or processing at least one of data or information involved in the method described above. In a possible design, the chip system further includes a memory. The memory is configured to store necessary computer programs and data for the UE. The chip system may consist of chips or may include a chip and other discrete components.

According to a sixteenth aspect of embodiments of the disclosure, a computer program is provided. When the computer program is running on a computer, the computer is caused to implement the method of the first aspect, the second aspect, the third aspect or the fourth aspect.

Additional aspects and advantages of embodiments of disclosure will be given in part in the following descriptions, become apparent in part from the following descriptions, or be learned from the practice of the disclosure.

### BRIEF DESCRIPTION OF THE DRAWINGS

The above-mentioned and/or additional aspects and advantages of the disclosure will be apparent and easily understood from the following description of embodiments taken in combination with the accompanying drawings, in which:
FIG. 1 is a schematic diagram of a communication system according to an embodiment of the disclosure.
FIG. 2 is a flowchart of a method for generating a direct communication key according to an embodiment of the disclosure.
FIG. 3 is a flowchart of a method for generating a direct communication key according to an embodiment of the disclosure.
FIG. 4 is a flowchart of a method for generating a direct communication key according to an embodiment of the disclosure.
FIG. 5 is a flowchart of a method for generating a direct communication key according to an embodiment of the disclosure.
FIG. 6 is a flowchart of a method for generating a direct communication key according to an embodiment of the disclosure.
FIG. 7 is a flowchart of a method for generating a direct communication key according to an embodiment of the disclosure.
FIG. 8 is a flowchart of a method for generating a direct communication key according to an embodiment of the disclosure.
FIG. 9 is a schematic diagram of a communication apparatus according to an embodiment of the disclosure.
FIG. 10 is a schematic diagram of another communication apparatus according to an embodiment of the disclosure.
FIG. 11 is a schematic diagram of a chip according to an embodiment of the disclosure.

### DETAILED DESCRIPTION

The embodiments of the disclosure will be described in detail, examples of which are illustrated in the accompanying drawings, in which the same or similar numbers indicate the same or similar elements or elements having the same or similar functions throughout. The embodiments described below with reference to the accompanying drawings are exemplary and are intended to explain the disclosure, and should not be construed as limiting the disclosure.

In order to better understand a method for generating a direct communication key disclosed in the embodiments of the disclosure, a communication system to which the embodiments of the disclosure are applied will be described first.

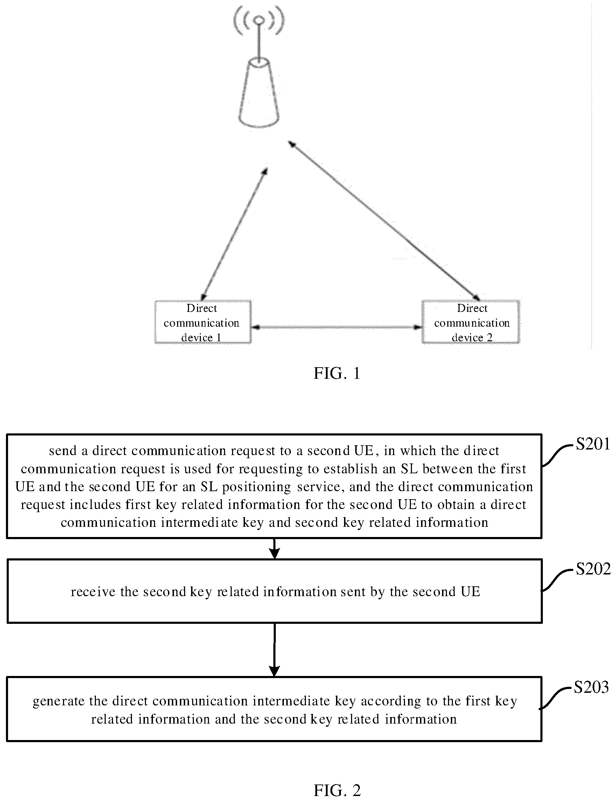

As illustrated in FIG. 1, in the scenario of direct communication between direct communication devices, a network device configures various transmission parameters for data transmission for a direct communication device 1. The direct communication device 1 acts as a data sending end, and a direct communication device 2 acts as a data receiving end, and the direct communication is performed between the direct communication device 1 and the direct communication device 2. A link for communication between the network device and the direct communication device is an uplink and downlink, and a link between direct communication devices is a sidelink (SL).

It is understood that the wireless communication system shown in FIG. 1 is only a schematic illustration. The wireless communication system may also include other network devices, such as core network devices, wireless relay devices and wireless backhaul devices, which are not shown in FIG. 1. The numbers of network devices and terminals included in the wireless communication system are not limited in embodiments of the disclosure.

It is further understood that the wireless communication system of the embodiments of the disclosure is a network providing wireless communication functions. The wireless communication system can adopt different communication technologies, e.g., code division multiple access (CDMA), wideband CDMA (WCDMA), time division multiple access (TDMA), frequency division multiple access (FDMA), orthogonal frequency-division multiple access (OFDMA), single carrier FDMA (SC-FDMA), and carrier sense multiple access with collision avoidance. According to the capacity, speed, delay and other factors of different networks, the networks are divided into 2nd generation (2G) networks, 3G networks, 4G networks or future evolved networks, such as 5G networks, which can also be called NR networks. For convenience of description, the wireless communication network may also be referred to as network in the disclosure.

The network device involved in this disclosure can also be called radio access network device. The radio access network device may be a base station, an evolved node B (eNB), a home base station, an access point (AP) in a wireless fidelity (WIFI) system, a wireless relay node, a wireless backhaul node, a transmission point (TP), a transmission and reception point (TRP), etc., and it may also be a gNB in a NR system, or it may be a component or a part of equipments that constitute the base station. In a Vehicle to Everything (V2X) system, the network device may be a vehicle-mounted device. It should be understood that the specific technology and the specific equipment form adopted by the network device are not limited in the embodiments of the disclosure.

The terminal involved in this disclosure may also be called terminal device, UE, Mobile Station (MS), Mobile Terminal (MT), etc. The terminal is a device that provides voice and/or data connectivity to users. For example, the terminal may be a handheld device with wireless connection functions, a vehicle-mounted device, etc. Currently, the terminal may be, for example, a mobile phone, a pocket personal computer (PPC), a handheld computer, a personal digital assistant (PDA), a notebook computer, a tablet computer, a wearable device, or a vehicle-mounted device. In addition, in the V2X system, the terminal may also be a vehicle-mounted device. It should be understood that the specific technology and the specific equipment form adopted by the terminal are not limited in the embodiments of the disclosure.

In the disclosure, the communication scenario of the direct communication between direct communication devices may also be a device to device (D2D) communication scenario. The direct communication device for the direct communication in the embodiments of the disclosure may include various handheld devices with wireless communication functions, vehicle-mounted devices, wearable devices, computing devices or other processing devices connected to a wireless modem, as well as various forms of UEs, MSs, terminals, terminal equipments and so on. For convenience of description, the embodiments of the disclosure will be described below by taking the direct communication device as the terminal as an example.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understandable by those skilled in the art that as system architectures evolve and new business scenarios emerge, the technical solutions according to the embodiments of the disclosure are also applicable to similar technical problems.

In the current communication standard of enhanced 5G architecture for supporting ranging positioning or SL positioning, there are multiple positioning solutions, in which the UE participating in the positioning needs to establish, for ranging or SL positioning services, an SL for an SL positioning service to realize the direct communication.

Currently, for security protection of the direct communication for positioning services, the existing security mechanism for the direct communication of V2X services and proximity-based services (Pro Se) in the communication standard may be reused. In this scheme, each application or service provider provides a long-term credential for the UE involved in the direct communication, in which the credential is acted as a root key for protecting the direct communication security.

However, the current SL positioning services are mainly triggered by the operator networks. For the security protection of the direct communication corresponding to this type of SL positioning service, because the involved UE is not bound to a specific application service, and the role of the UE in the positioning service may change. For example, the UE may be a UE to be positioned, but sometimes the UE may a UE that assists the positioning. In this case, it is impossible to ensure that the long-term credential may be provided to the involved UE. With the lack of long-term credential, the existing security mechanism for the direct communication of V2X services or Pro Se may no longer apply. Therefore, it is necessary to study different security mechanisms for protecting the direct communication of the SL positioning service.

Therefore, the disclosure provides a method and an apparatus for generating a direct communication key, which may be applied to various communication systems such as LTE system, 5G mobile communication system, 5G NR system, or other future new mobile communication systems. Through the solutions of the disclosure, a direct communication intermediate key that may be shared by a first UE and a second UE is generated, so that integrity protection and/or encryption protection of the direct communication between the first UE and the second UE for the SL positioning service may be realized according to the direct communication intermediate key, and a security of data transmission in the direct communication for the SL positioning service is improved.

A method and an apparatus for generating a direct communication key provided by this disclosure are introduced in detail in combination with the attached drawings.

FIG. 2 is a flowchart of a method for generating a direct communication key provided by an embodiment of the disclosure. The method is performed by a first UE. As illustrated in FIG. 2, the method may include, but is not limited to, the following steps.

At step S201, a direct communication request is sent to a second UE, in which the direct communication request is used for requesting to establish an SL between the first UE and the second UE for an SL positioning service, and the direct communication request includes first key related information used for the second UE to obtain a direct communication intermediate key and second key related information.

In this embodiment of the disclosure, in order to support the SL positioning service, each public land mobile network (PLMN) corresponds to a positioning key management function (PKMF) network element. The PKMF is used to generate related information for security protection of the direct communication and provide the related information to the UE. In the SL positioning service, at least two UEs are needed to position each other, such as the first UE and the second UE. The first UE corresponds to a first PKMF, and the second UE corresponds to a second PKMF. When the first UE receives a request from a network side, the first UE starts to perform ranging/positioning with the second UE, and sends the direct communication request to the second UE to request to establish the SL between the first UE and the second UE for the SL positioning service.

The first key related information included in the direct communication request may be used for the second UE to obtain the direct communication intermediate key and the second key related information. For example, the first key related information may be used for the second UE to obtain the direct communication intermediate key and the second key related information from the first PKMF through the second PKMF. Then, the second UE may feed back the second key related information to the first UE.

At step S202, the second key related information sent by the second UE is received.

At step S203, the direct communication intermediate key is generated according to the first key related information and the second key related information.

The direct communication intermediate key is used to generate a direct communication session key for integrity protection and/or encryption protection of information transmitted between the first UE and the second UE through the SL.

In this embodiment of the disclosure, the first UE generates the direct communication intermediate key according to the second key related information sent by the second UE and the first key related information. Thus, protection of the information transmitted through the SL (which is used for the SL positioning service) between the first UE and the second UE may be achieved. The specific step is generating a direct communication session key according to the direct communication intermediate key, in which the direct communication session key may be used for the integrity protection and/or encryption protection of the information transmitted through the SL.

In this embodiment, the direct communication intermediate key that may be shared by the first UE and the second UE is generated. Thus, the integrity protection and/or encryption protection of the direct communication for the SL positioning service between the first UE and the second UE may be achieved according to direct communication intermediate key, which improves a security of data transmission in the direct communication for the SL positioning service.

Optionally, the first key related information includes a first random number, root key related information for obtaining a root key, a positioning service code for indicating a positioning service type, and the second key related information includes a second random number.

In a possible embodiment, in the first key related information, the root key related information is used to indicate the corresponding root key, which is also called an SL Positioning Key (SLPK). The positioning service code, also known as an SL Positioning Code (SLPC), is a randomly generated temporary number, which is used to uniquely identify the corresponding positioning service type and prevent a wrong positioning service type from being executed. The first random number is generated by the first UE, and the second random number is generated by the PKMF of the first UE.

Optionally, the root key related information includes a valid root key identification (ID) or a subscription concealed identifier (SUCI) of the first UE.

In this embodiment of the disclosure, there are a plurality of root keys, but invalid keys cannot be used for encryption in the direct communication, so it is necessary to provide the valid root key ID in the root key related information to identify the corresponding valid root key. The SUCI may be used to obtain the valid root key to ensure that the UE obtains the valid root key.

In a possible embodiment, the valid root key ID is an SLPK ID.

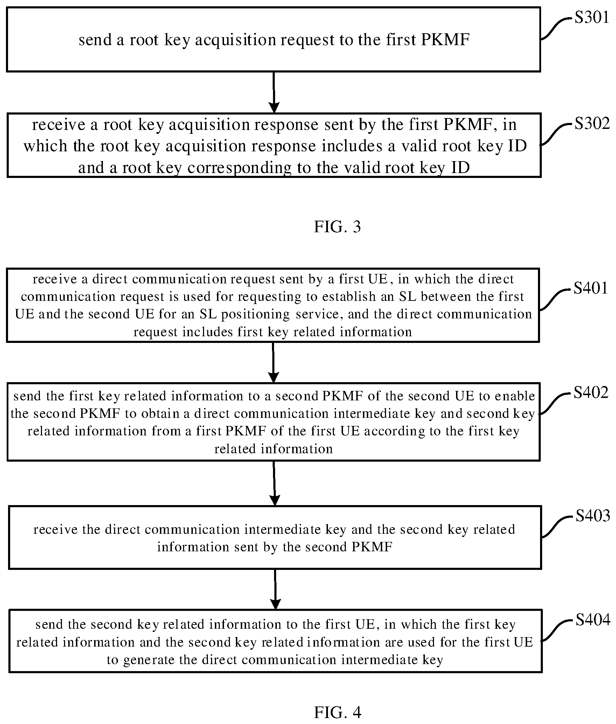

FIG. 3 is a flowchart of a method for generating a direct communication key provided by an embodiment of the disclosure. The method is performed by a first UE. As illustrated in FIG. 3, the method may include, but is not limited to, the following steps.

At step S301, a root key acquisition request is sent to a first PKMF.

At step S302, a root key acquisition response sent by the first PKMF is received, in which the root key acquisition response includes a valid root key ID and a root key corresponding to the valid root key ID.

When the first UE receives a network request to start ranging/positioning with a second UE, the first UE needs to send the root key acquisition request to its corresponding first PKMF to request the root key for security establishment, and then the first UE may send a direct communication request to the second UE. After receiving the root key acquisition request, the first PKMF feeds back the root key acquisition response to the first UE, in which the root key acquisition response includes the valid root key ID and the root key corresponding to the valid root key ID.

In a possible embodiment, the valid root key ID is an SLPK ID, and the root key corresponding to the SLPK ID is an SLPK.

Optionally, the root key acquisition request includes a local root key ID stored by the first UE, in which the first PKMF determines the valid root key ID and the root key according to the local root key ID.

In this embodiment of the disclosure, one or more local root key IDs are stored in a storage module of the first UE. When sending the root key acquisition request to the first PKMF, the local root key ID is provided to the first PKMF, so that the first PKMF may select an appropriate root key according to the local root key ID and feeds back the corresponding root key ID to the first UE, to instruct the first UE to select the corresponding root key to encrypt the information transmitted through the direct communication.

Optionally, the direct communication session key includes a confidentiality key for encrypting and decrypting information and an integrity key for verifying a data integrity.

In this embodiment of the disclosure, the direct communication session key is generated according to the direct communication intermediate key. The confidentiality key included in the direct communication session key is used to encrypt and decrypt data transmitted between the first UE and the second UE in the direct communication for the SL positioning service, and the integrity key is used to verify the data integrity of data transmitted between the first UE and the second UE in the direct communication for the SL positioning service.

In a possible embodiment, the direct communication session key protects a session confidentiality key and a session integrity key. The confidentiality key is a SL positioning encryption key (SLPEK), and the integrity key is a SL positioning integrity key (SLPIK).

FIG. 4 is a flowchart of a method for generating a direct communication key provided by an embodiment of the disclosure. The method is performed by a second UE. As illustrated in FIG. 4, the method may include, but is not limited to, the following steps.

At step S401, a direct communication request sent by a first UE is received, in which the direct communication request is used for requesting to establish an SL between the first UE and the second UE for an SL positioning service, and the direct communication request includes first key related information.

In this embodiment of the disclosure, in order to support the SL positioning service, each PLMN corresponds to a PKMF. The PKMF is used to generate related information for security protection of the direct communication and provide the related information to the UE. In a positioning service, at least two UEs are needed to position each other, such as the first UE and the second UE. The first UE corresponds to a first PKMF, and the second UE corresponds to a second PKMF. When the first UE receives a request from a network side, the first UE starts to perform ranging/positioning with the second UE, and sends the direct communication request to the second UE to request to establish the SL between the first UE and the second UE for the SL positioning service.

At step S402, the first key related information is sent to a second PKMF of the second UE, to enable the second PKMF to obtain a direct communication intermediate key and second key related information from a first PKMF of the first UE according to the first key related information.

At step S403, the direct communication intermediate key and the second key related information sent by the second PKMF are received.

At step S404, the second key related information is sent to the first UE, in which the first key related information and the second key related information are used for the first UE to generate the direct communication intermediate key.

The direct communication intermediate key is used to generate a direct communication session key for integrity protection and/or encryption protection of information transmitted between the first UE and the second UE through the SL.

In this embodiment of the disclosure, the direct communication request sent by the first UE includes the first key related information, and the first key related information may be used for the second UE to obtain the direct communication intermediate key and the second key related information from the first PKMF through the second PKMF. After that, the second UE may feed back the second key related information to the first UE.

Optionally, the first key related information includes a first random number, root key related information for obtaining a root key, a positioning service code for indicating a positioning service type, and the second key related information includes a second random number.

In a possible embodiment, in the first key related information, the root key related information is used to indicate the corresponding root key, which is also called an SLPK. The positioning service code, also known as an SLPC, is a randomly generated temporary number, which is used to uniquely identify the corresponding positioning service type and prevent a wrong positioning service type from being executed. The first random number is generated by the first UE, and the second random number is generated by the PKMF of the first UE.

Optionally, the root key related information includes a valid root key ID or a SUCI of the first UE.

In this embodiment of the disclosure, there are a plurality of root keys, but invalid keys cannot be used for encryption in the direct communication, so it is necessary to provide the valid root key ID in the root key related information to indicate the corresponding valid root key. The SUCI may be used to obtain the valid root key to ensure that the UE obtains the valid root key. Optionally, the direct communication session key includes a confidentiality key for information encrypting and decrypting, and an integrity key for verifying a data integrity.

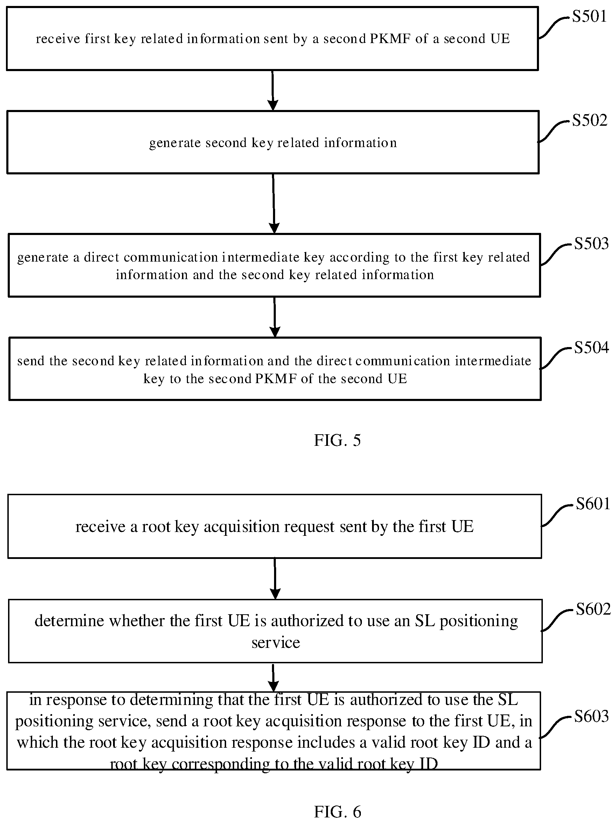

FIG. 5 is a flowchart of a method for generating a direct communication key provided by an embodiment of the disclosure. The method is performed by a first PKMF of a first UE. As illustrated in FIG. 5, the method may include, but is not limited to, the following steps.

At step S501, first key related information sent by a second PKMF of a second UE is received.

The first key related information is obtained by the second UE from a direct communication request sent by the first UE. The direct communication request is used to request to establish an SL between the first UE and the second UE for an SL positioning service. The second UE sends the first key related information to the second PKMF, so that the first PKMF may obtain the first key related information from the second PKMF.

At step S502, second key related information is generated.

At step S503, a direct communication intermediate key is generated according to the first key related information and the second key related information.

At step S504, the second key related information and the direct communication intermediate key are sent to the second PKMF of the second UE.

The second PKMF sends the direct communication intermediate key to the second UE, and sends the second key related information to the first UE via the second UE, so that the first UE may generate the direct communication intermediate key according to the first key related information and the second key related information.

The direct communication intermediate key is used to generate a direct communication session key for integrity protection and/or encryption protection of information transmitted between the first UE and the second UE during an execution of an SL positioning service.

In this embodiment of the disclosure, after receiving the direct communication request sent by the first UE, the second UE sends the first key related information included therein to the first PKMF through the second PKMF. The first PKMF then generates the second key related information. After that, the first PKMF may generate the direct communication intermediate key according to the second key related information and the first key related information. Finally, the generated second key related information and the direct communication intermediate key are fed back to the second PKMF.

Optionally, the first key related information includes a first random number, root key related information for obtaining a root key, a positioning service code for indicating a positioning service type, and the second key related information includes a second random number.

Optionally, the root key related information includes a valid root key ID or an SUCI of the first UE.

It should be understood that the first PKMF of the first UE generates an intermediate key based on the first key related information and the second key related information, and sends the intermediate key and the second key related information to the second PKMF of the second UE. However, for the first PKMF, the order of obtaining the first key related information and the second key related information may be adjusted as required. In the above embodiment, the first PKMF obtains the first key related information and then generates the second key related information. However, it should be understood that it is also possible for the first PKMF to generate the second key related information and then obtain the first key related information from the second PKMF, or the first PKMF may obtain the first key related information and generate the second key related information simultaneously. That is, the execution order of step S501 and step S502 may be adjusted as needed. Step S501 and step S502 may be executed one after another, or executed simultaneously.

FIG. 6 is a flowchart of a method for generating a direct communication key provided by an embodiment of the disclosure. The method is performed by a first PKMF. As illustrated in FIG. 6, the method may include, but is not limited to, the following steps.

At step S601, a root key acquisition request sent by a first UE is received.

At step S602, it is determined whether the first UE is authorized to use an SL positioning service.

At step S603, in response to determining that the first UE is authorized to use the SL positioning service, a root key acquisition response is sent to the first UE, in which the root key acquisition response includes a valid root key ID and a root key corresponding to the valid root key ID.

In this embodiment of the disclosure, when the first UE receives a network request to start ranging/positioning with a second UE, it needs to send the root key acquisition request to its corresponding first PKMF to request for the root key for security establishment. Then the first UE may sends a direct communication request to the second UE. After receiving the root key acquisition request, the first PKMF first determines whether the first UE is authorized to use the SL positioning service. When it is determined that the first UE is authorized to use the SL positioning service, the first PKMF feeds back the root key acquisition response to the first UE, which includes the valid root key ID and the root key corresponding to the valid root key ID.

Optionally, the root key acquisition request includes a local root key ID stored by the first UE, and the method further includes:

determining the valid root key ID and the root key according to the local root key ID.

In this embodiment of the disclosure, one or more local root key IDs are stored in a storage module of the first UE. When sending the root key acquisition request to the first PKMF, the local root key ID is also provided to the first PKMF, so that the first PKMF may select an appropriate root key according to the local root key ID and feeds back the corresponding root key ID to the first UE to instruct the first UE to select the corresponding root key to encrypt the information transmitted through the direct communication.

Optionally, the direct communication session key includes a confidentiality key for encrypting and decrypting information and an integrity key for verifying a data integrity.

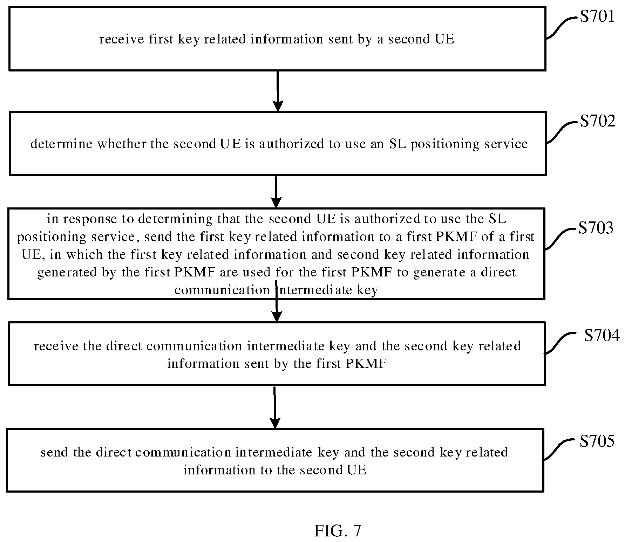

FIG. 7 is a flowchart of a method for generating a direct communication key provided by an embodiment of the disclosure. The method is performed by a second PKMF. As illustrated in FIG. 7, the method may include, but is not limited to, the following steps.

At step S701, first key related information sent by a second UE is received.

The second UE obtains the first key related information from a direct communication request from the first UE. The direct communication request is used to request to establish an SL between the first UE and the second UE for an SL positioning service.

At step S702, it is determined whether the second UE is authorized to use an SL positioning service.

At step S703, in response to determining that the second UE is authorized to use the SL positioning service, the first key related information is sent to a first PKMF of a first UE. The first key related information and second key related information generated by the first PKMF are used for the first PKMF to generate a direct communication intermediate key.

In this embodiment of the disclosure, after receiving the first key related information from the second UE, the second PKMF first determines whether the second UE is authorized to use the SL positioning service. When the second UE is authorized to use the SL positioning service, the second PKMF sends the first key related information to the first PKMF, and the first key related information is used for the first PKMF to generate the direct communication intermediate key and the second key related information.

At step S704, the direct communication intermediate key and the second key related information sent by the first PKMF are received.

At step S705, the direct communication intermediate key and the second key related information are sent to the second UE.

The second UE sends the second key related information to the first UE, so that the first UE may generate the direct communication intermediate key according to the first key related information and the second key related information.

The direct communication intermediate key is used to generate a direct communication session key for integrity protection and/or encryption protection of information transmitted between the first UE and the second UE during an execution of the SL positioning service.

After receiving the direct communication intermediate key and the second key related information fed back by the first PKMF, the direct communication intermediate key and the second key related information may be sent to the second UE for the direct communication between the second UE and the first UE, and the direct communication session key is generated for protecting the data transmitted in direct communication.

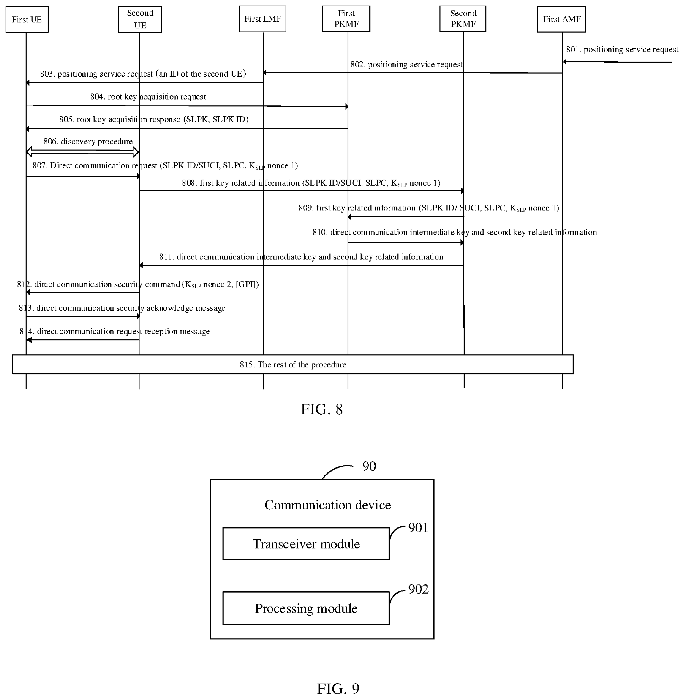

FIG. 8 is a flowchart of a method for generating a direct communication key provided by an embodiment of the disclosure. The method is performed by a first UE. As illustrated in FIG. 8, the method may include, but is not limited to, the following steps.

At step 801, when any 5GC network function (NF) or application function (AF) requests to perform a positioning on the first UE, a positioning service request is sent to a first access and mobility management function (AMF) corresponding to the first UE to request a positioning result between the first UE and a second UE.

Optionally, the positioning service request is an SL positioning service request.

At step 802, after receiving the positioning service request, the first AMF sends the positioning service request to a first location management function (LMF) corresponding to the first UE.

At step 803, after receiving the positioning service request, the first LMF sends the positioning service request to the first UE, in which the positioning service request includes an ID of the second UE to indicate that the first UE needs to perform a positioning with the second UE.

At step 804, after receiving the positioning service request of the LMF, the first UE first sends a root key acquisition request to the first PKMF corresponding to the first UE to request the first PKMF to provide a root key, in which the root key acquisition request includes a local root key ID stored by the first UE.

Optionally, when the first UE already has a valid root key from the first PKMF, the root key acquisition request also includes an ID of the valid root key.

At step 805, after receiving the root key acquisition request, the first PKMF determines whether the first UE is authorized to use an SL positioning service, and sends a root key acquisition response to the first UE when it is determined that the first UE is authorized to use the SL positioning service, in which the root key acquisition response includes a valid root key ID (SLPK ID) and a root key (SLPK) corresponding to the valid root key ID.

At step 806, a discovery process is performed between the first UE and the second UE to find each other.

At step 807, when there is no valid root key in the first UE, a direct communication request is sent to the second UE, in which the direct communication request is used to request to establish an SL between the first UE and the second UE for the SL positioning service. The direct communication request includes first key related information, in which the first key related information includes root key related information (e.g., SLPK ID and SUCI) for obtaining a root key, a positioning service code (SLPC) for indicating a positioning service type and a first random number K_{SLP} nonce1.

At step 808, after receiving the direct communication request sent by the first UE, the second UE forwards the direct communication request to its corresponding second PKMF.

At step 809, after receiving the direct communication request, the second PKMF forwards the direct communication request to the first PKMF.

At step 810, after receiving the direct communication request, the first PKMF generates second key related information (second random number K_{SLP} nonce2), generates a direct communication intermediate key K_{SLP} according to the first key related information and the second key related information, and then feeds back the second key related information and the direct communication intermediate key to the second PKMF.

Optionally, the first PKMF may also generate GBA Push Info (GPI), which is used to generate the root key and the root key ID together with the SUCI.

At step 811, the second PKMF sends the acquired second key related information and the direct communication intermediate key to the second UE.

At step 812, after receiving the second key related information and the direct communication intermediate key, the second UE sends the second key related information to the first UE.

At step 813, after receiving the second key related information, the first UE may generate the direct communication intermediate key according to the second random number in the second key related information and the first key related information, and generate a direct communication session key based on the direct communication intermediate key, and then send a direct communication security acknowledge message to the second UE to inform the second UE that key configuration is completed, in which the direct communication session key includes a confidentiality key (SLPEK) for information encrypting and decrypting and an integrity key (SLPIK) for verifying a data integrity.

At step 814, the second UE responses with a receiving message of the direct communication request to the first UE to indicate that the direct communication request has been received.

At step 815, the positioning processing is continued.

In the above embodiments of the disclosure, the method in the embodiments of the disclosure is introduced from the perspective of the network device. In order to realize the functions in the methods in the embodiments of the disclosure, the network device may include a hardware structure and a software module, and the above functions are realized in the form of a hardware structure, a software module, or a combination of the hardware structure and the software module. A certain function of the above functions may be implemented in a hardware structure, a software module, or a combination of the hardware structure and the software module.

Corresponding to the method for generating a direct communication key provided in the above embodiments, this disclosure also provides an apparatus for generating a direct communication key. Since the apparatus for generating a direct communication key provided in this embodiment of the disclosure corresponds to the method for generating a direct communication key provided in the above embodiments, the implementation of the method for generating a direct communication key is also applicable to the apparatus for generating a direct communication key provided in this embodiment, and will not be described in detail in this embodiment.

In the above embodiments of the disclosure, the methods provided by the embodiments of the disclosure are introduced from the perspectives of the network device and the UE respectively. In order to realize the functions in the methods provided by the embodiments of the disclosure, the network device or the UE may include a hardware structure and a software module, and the above functions are realized in the form of the hardware structure, the software module, or a combination of the hardware structure and the software module. A certain function of the above functions may be implemented in a hardware structure, a software module, or a combination of the hardware structure and the software module.

FIG. 9 is a schematic diagram of a communication apparatus 90 provided by an embodiment of the disclosure. The communication apparatus 90 shown in FIG. 9 may include a transceiver module 901 and a processing module 902. The transceiver module 901 may include a sending module and/or a receiving module. The sending module is configured for realizing a sending function, and the receiving module is configured for realizing a receiving function. The transceiver module 901 may realize the sending function and/or the receiving function.

The communication apparatus 90 may be a UE (e.g., the UE in the above method embodiments), an apparatus in the UE, or an apparatus that may be used together with the UE. Alternatively, the communication apparatus 90 may be a network device, an apparatus in the network device, or an apparatus that may be used together with the network device.

When the communication apparatus 90 is a UE (e.g., the first UE in the above method embodiments), the apparatus includes:
a transceiver module and a processing module.

The transceiver module is configured to:
send a direct communication request to a second UE, in which the direct communication request is used for requesting to establish an SL between the first UE and the second UE for an SL positioning services, and the direct communication request includes first key related information, wherein the first key related information is used for the second UE to obtain a direct communication intermediate key and second key related information from a first PKMF of the first UE; and
receive the second key related information sent by the second UE.

The processing module is configured to generate the direct communication intermediate key according to the first key related information and the second key related information.

The direct communication intermediate key is used to generate a direct communication session key for integrity protection and/or encryption protection of information transmitted between the first UE and the second UE through the SL.

When the communication apparatus 90 is a UE (e.g., the second UE in the above method embodiments), the device includes:
a transceiver module, configured to:
receive a direct communication request sent by a first UE, in which the direct communication request is used for requesting to establish an SL between the first UE and the second UE for an SL positioning service, and the direct communication request includes first key related information;
send the first key related information to a second PKMF of the second UE, to enable the second PKMF to obtain a direct communication intermediate key and second key related information from a first PKMF of the first UE according to the first key related information;
receive the direct communication intermediate key and the second key related information sent by the second PKMF; and
send the second key related information to the first UE, in which the first key related information and the second key related information are used for the first UE to generate the direct communication intermediate key.

The direct communication intermediate key is used to generate a direct communication session key for integrity protection and/or encryption protection of information transmitted through the SL between the first UE and the second UE through the SL.

When the communication apparatus 90 is a network device (e.g., the first PKMF of the first UE in the above method embodiments), the device includes:
a transceiver module and a processing module.

The transceiver module is configured to: receive first key related information sent by a second PKMF of a second UE.

The processing module is configured to generate second key related information, and generate a direct communication intermediate key according to the first key related information and the second key related information.

The transceiver module is further used to send the second key related information and the direct communication intermediate key to the second PKMF of the second UE.

The direct communication intermediate key is used to generate a direct communication session key for integrity protection and/or encryption protection of information transmitted between the first UE and the second UE.

When the communication apparatus 90 is a network device (e.g., the second PKMF of the second UE in the above method embodiments), the device includes:
a transceiver module and a processing module.

The transceiver module is configured to: receive first key related information sent by the second UE.

The processing module is configured to determine whether the second UE is authorized to use an SL positioning service.

The transceiver module is further configured to, in response to determining that the second UE is authorized to use the SL positioning service, send the first key related information to a first PKMF of a first UE, in which the first key related information and second key related information generated by the first PKMF are used by the first PKMF to generate a direct communication intermediate key; receive the direct communication intermediate key and the second key related information sent by the first PKMF; and send the direct communication intermediate key and the second key related information to the second UE.

The direct communication intermediate key is used to generate a direct communication session key for integrity protection and/or encryption protection of information transmitted between the first UE and the second UE.

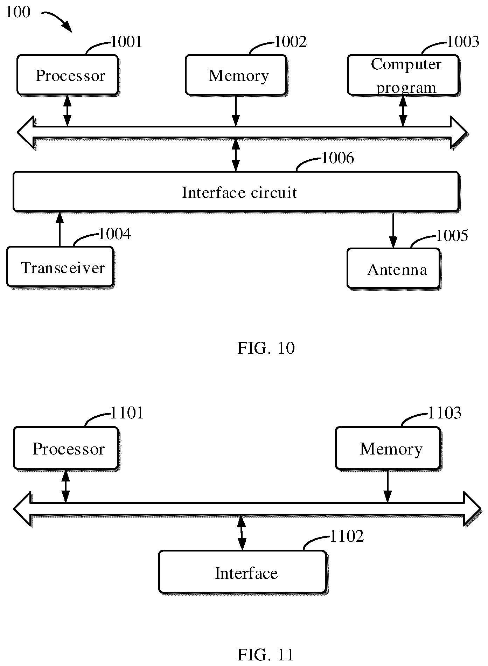

As illustrated in FIG. 10, FIG. 10 is a schematic diagram of a communication apparatus 100 according to an embodiment of the disclosure. The communication apparatus 100 may be a network device, a UE (e.g., the UE in the above method embodiments), or a chip, a chip system or a processor that supports the network device to realize the above-described methods, or a chip, a chip system or a processor that supports the UE to realize the above-described methods. The apparatus may be configured to realize the methods described in the above method embodiments with reference to the description of the above-described method embodiments.

The communication apparatus 100 may include one or more processors 1001. The processor 1001 may be a general purpose processor or a dedicated processor, such as, a baseband processor or a central processor. The baseband processor is configured for processing communication protocols and communication data. The central processor is configured for controlling the communication apparatus (e.g., base station, baseband chip, terminal, terminal chip, central unit (CU) and distributed unit (DU)), executing computer programs, and processing data of the computer programs.

Optionally, the communication apparatus 100 may include one or more memories 1002 on which computer programs 1003 are stored. The processor 1001 executes the computer programs 1003 to cause the communication apparatus 100 to perform the methods described in the above method embodiments. Optionally, the memory 1002 may also store data. The communication apparatus 100 and the memory 1002 may be set separately or integrated together.

Optionally, the communication apparatus 100 may also include a transceiver 1004 and an antenna 1005. The transceiver 1004 may be referred to as transceiver unit, transceiver machine, or transceiver circuit, for realizing the transceiver function. The transceiver 1004 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 100 may also include one or more interface circuits 1006. The interface circuits 1006 are configured to receive code instructions and transmit them to the processor 1001. The processor 1001 runs the code instructions to cause the communication apparatus 100 to perform the method described in the method embodiments.

In an implementation, the processor 1001 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1001 stores a computer program 1003. When the computer program 1003 runs on the processor 1001, the communication apparatus 100 is caused to perform the method described in the above method embodiments. The computer program 1003 may be solidified in the processor 1001, in which case the processor 1001 may be implemented by hardware.

In an implementation, the communication apparatus 100 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or a UE (e.g., the UE in the above method embodiments), but the scope of the communication apparatus described in the disclosure is not limited thereto, and the structure of the communication apparatus is not limited by FIG. 10. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication apparatus may be a chip or a chip system may be referred to the schematic diagram of a chip shown in FIG. 11. In FIG. 11, the chip includes a processor 1101 and an interface 1102. There may be one or more processors 1101, and there may be multiple interfaces 1102.

Optionally, the chip further includes a memory 1103 configured for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a direct communication key generation system. The system includes a communication apparatus as a UE (e.g., the UE in the above method embodiments) and a communication apparatus as a network device in the aforementioned embodiment of FIG. 9. Or, the system includes a communication apparatus as a UE (e.g., the UE in the above method embodiments) and a communication apparatus as a network device in the aforementioned embodiment of FIG. 9.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments of the disclosure disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A method for generating a direct communication key, performed by a first user equipment (UE), comprising:
sending a direct communication request to a second UE, wherein the direct communication request is used for requesting to establish a sidelink (SL) between the first UE and the second UE for an SL positioning service, and the direct communication request comprises first key related information, wherein the first key related information is used for the second UE to obtain a direct communication intermediate key and second key related information from a first positioning key management function (PKMF) of the first UE;
receiving the second key related information sent by the second UE; and
generating the direct communication intermediate key according to the first key related information and the second key related information;
wherein the direct communication intermediate key is used to generate a direct communication session key for integrity protection and/or encryption protection of information transmitted between the first UE and the second UE through the SL.

2. The method of claim 1, wherein the first key related information comprises a first random number, root key related information for obtaining a root key, and a positioning service code for indicating a positioning service type, and the second key related information comprises a second random number.

3. The method of claim 2, wherein the root key related information comprises a valid root key identification (ID) or a subscription concealed identifier (SUCI) of the first UE.

4. The method of claim 3, further comprising:
sending a root key acquisition request to the first PKMF; and
receiving a root key acquisition response sent by the first PKMF, wherein the root key acquisition response comprises the valid root key ID and a root key corresponding to the valid root key ID.

5. The method of claim 4, wherein the root key acquisition request comprises a local root key ID stored by the first UE, wherein the first PKMF determines the valid root key ID and the root key according to the local root key ID.

6. The method of any one of claims 1-5, wherein the direct communication session key comprises a confidentiality key for encrypting and decrypting information and an integrity key for verifying a data integrity.

7. A method for generating a direct communication key, performed by a second user equipment (UE), comprising:
receiving a direct communication request sent by a first UE, wherein the direct communication request is used for requesting to establish a sidelink (SL) between the first UE and the second UE for an SL positioning service, and the direct communication request comprises first key related information;
sending the first key related information to a second positioning key management function (PKMF) of the second UE, to enable the second PKMF to obtain a direct communication intermediate key and second key related information from a first PKMF of the first UE according to the first key related information;
receiving the direct communication intermediate key and the second key related information sent by the second PKMF; and
sending the second key related information to the first UE, wherein the first key related information and the second key related information are used for the first UE to generate the direct communication intermediate key;
wherein the direct communication intermediate key is used to generate a direct communication session key for integrity protection and/or encryption protection of information transmitted between the first UE and the second UE through the SL for the SL positioning service.

8. The method of claim 7, wherein the first key related information comprises a first random number, root key related information for obtaining a root key, a positioning service code for indicating a positioning service type, and the second key related information comprises a second random number.

9. The method of claim 8, wherein the root key related information comprises a valid root key identification (ID) or a subscription concealed identifier (SUCI) of the first UE.

10. The method of any one of claims 7-9, wherein the direct communication session key comprises a confidentiality key for encrypting and decrypting information and an integrity key for verifying a data integrity.

11. A method for generating a direct communication key, performed by a first positioning key management function (PKMF) of a first user equipment (UE), comprising:
receiving first key related information sent by a second PKMF of a second UE;
generating second key related information;
generating a direct communication intermediate key according to the first key related information and the second key related information; and
sending the second key related information and the direct communication intermediate key to the second PKMF of the second UE;
wherein the direct communication intermediate key is used to generate a direct communication session key for integrity protection and/or encryption protection of information transmitted between the first UE and the second UE during an execution of a sidelink (SL) positioning service.

12. The method of claim 11, wherein the first key related information comprises a first random number, root key related information for obtaining a root key and a positioning service code for indicating a positioning service type, and the second key related information comprises a second random number.

13. The method of claim 12, wherein the root key related information comprises a valid root key identification (ID) or a subscription concealed identifier (SUCI) of the first UE.

14. The method of claim 13, further comprising:
receiving a root key acquisition request sent by the first UE;
determining whether the first UE is authorized to use the SL positioning service; and
in response to determining that the first UE is authorized to use the SL positioning service, sending a root key acquisition response to the first UE, wherein the root key acquisition response comprises the valid root key ID and a root key corresponding to the valid root key ID.

15. The method of claim 14, wherein the root key acquisition request comprises a local root key ID stored by the first UE, and the method further comprises:
determining the valid root key ID and the root key according to the local root key ID.

16. The method of any one of claims 11-15, wherein the direct communication session key comprises a confidentiality key for encrypting and decrypting information and an integrity key for verifying a data integrity.

17. A method for generating a direct communication key, performed by a second positioning key management function (PKMF) of a second user equipment (UE), comprising:
receiving first key related information sent by the second UE;
determining whether the second UE is authorized to use a sidelink (SL) positioning service;
in response to determining that the second UE is authorized to use the SL positioning service, sending the first key related information to a first PKMF of a first UE, wherein the first key related information and second key related information generated by the first PKMF are used for the first PKMF to generate a direct communication intermediate key;
receiving the direct communication intermediate key and the second key related information sent by the first PKMF; and
sending the direct communication intermediate key and the second key related information to the second UE;
wherein the direct communication intermediate key is used to generate a direct communication session key for integrity protection and/or encryption protection of information transmitted between the first UE and the second UE during an execution of the SL positioning service.

18. The method of claim 17, wherein the first key related information comprises a first random number, root key related information for obtaining a root key and a positioning service code for indicating a positioning service type, and the second key related information comprises a second random number.

19. The method of claim 18, wherein the root key related information comprises a valid root key identification (ID) or a subscription concealed identifier (SUCI) of the first UE.

20. The method of any one of claims 17-19, wherein the direct communication session key comprises a confidentiality key for encrypting and decrypting information and an integrity key for verifying a data integrity.

21. An apparatus for generating a direct communication key, performed by a first user equipment (UE), comprising:
a transceiver module, configured to send a direct communication request to a second UE, wherein the direct communication request is used for requesting to establish a sidelink (SL) between the first UE and the second UE for an SL positioning service, and the direct communication request comprises first key related information, wherein the first key related information is used for the second UE to obtain a direct communication intermediate key and second key related information from a first positioning key management function (PKMF) of the first UE; and receive the second key related information sent by the second UE; and
a processing module, configured to generate the direct communication intermediate key according to the first key related information and the second key related information;
wherein the direct communication intermediate key is used to generate a direct communication session key for integrity protection and/or encryption protection of information transmitted between the first UE and the second UE through the SL.

22. An apparatus for generating a direct communication key, performed by a second user equipment (UE), wherein the apparatus comprises a transceiver module, configured to:
receive a direct communication request sent by a first UE, wherein the direct communication request is used for requesting to establish a sidelink (SL) between the first UE and the second UE for an SL positioning service, and the direct communication request comprises first key related information;
send the first key related information to a second positioning key management function (PKMF) of the second UE, to enable the second PKMF to obtain a direct communication intermediate key and second key related information from a first PKMF of the first UE according to the first key related information;
receive the direct communication intermediate key and the second key related information sent by the second PKMF; and
send the second key related information to the first UE, wherein the first key related information and the second key related information are used for the first UE to generate the direct communication intermediate key;
wherein the direct communication intermediate key is used to generate a direct communication session key for integrity protection and/or encryption protection of information transmitted between the first UE and the second UE through the SL for the SL positioning service.

23. An apparatus for generating a direct communication key, performed by a first positioning key management function (PKMF) of a first user equipment (UE), comprising:
a transceiver module, configured to receive first key related information sent by a second PKMF of a second UE;
a processing module, configured to generate second key related information, and generate a direct communication intermediate key according to the first key related information and the second key related information; and
the transceiver module further configured to send the second key related information and the direct communication intermediate key to the second PKMF of the second UE;
wherein the direct communication intermediate key is used to generate a direct communication session key for integrity protection and/or encryption protection of information transmitted between the first UE and the second UE.

24. An apparatus for generating a direct communication key, performed by a second positioning key management function (PKMF) of a second user equipment (UE), comprising:
a transceiver module, configured to receive first key related information sent by the second UE; and
a processing module, configured to determine whether the second UE is authorized to use a sidelink (SL) positioning service;
wherein the transceiver module is further configured to, in response to determining that the second UE is authorized to use the SL positioning service, send the first key related information to a first PKMF of a first UE, wherein the first key related information and second key related information generated by the first PKMF are used for the first PKMF to generate a direct communication intermediate key; receive the direct communication intermediate key and the second key related information sent by the first PKMF; and send the direct communication intermediate key and the second key related information to the second UE;
wherein the direct communication intermediate key is used to generate a direct communication session key for integrity protection and/or encryption protection of information transmitted between the first UE and the second UE.

25. A communication apparatus, comprising: a transceiver, a memory and a processor connected to the transceiver and the memory, respectively, wherein the process is configured to control the transceiver to receive and transmit wireless signals by executing computer-executable instructions stored in the memory, to implement the method of any one of claims 1-20.

26. A system, comprising a first user equipment (UE), a first positioning key management function (PKMF) of the first UE, a second UE and a second PKMF of the second UE, wherein the first UE is configured for executing the method of any one of claims 1-6, the second UE is configured for executing the method of any one of claims 7-10, the first PKMF is configured d for executing the method of any one of claims 11-16, and the second PKMF is configured for executing the method of any one of claims 17-20.

27. A computer storage medium, wherein the computer storage medium stores computer executable instructions, and when the computer executable instructions are executed by a processor, the method of any one of claims 1-20 is implemented.
